# EUROPÄISCHE PATENTSCHRIFT

(11) **EP 4 509 799 B1**
(45) Veröffentlichungstag und Bekanntmachung des Hinweises auf die Patenterteilung: **23.07.2025**
(21) Anmeldenummer: 23191922.6
(22) Anmeldetag: 17.08.2023
(51) Int. Cl.: G01D 18/00, G01D 21/02, G01D 3/036

(54) **SENSOR MIT ANPASSUNGSEINHEIT**
SENSOR WITH ADJUSTMENT UNIT
CAPTEUR AVEC UNITE DE REGLAGE

(43) Veröffentlichungstag der Anmeldung: 19.02.2025
(73) Patentinhaber: SICK AG, 79183 Waldkirch (DE)
(72) Erfinder: Sellmer, Christian, 78166 Donaueschingen (DE); Hirmer, Katrin, 78166 Donaueschingen (DE)
(74) Vertreter: Manitz Finsterwald Patent- und Rechtsanwaltspartnerschaft mbB

(56) Entgegenhaltungen:
- EP-B1- 3 671 105
- CH-A2- 702 140
- DE-A1- 102019 207 279
- US-A1- 2003 135 314
- US-A1- 2015 358 027
- US-A1- 2018 195 852
- US-A1- 2021 048 810

## Beschreibung

Die Erfindung betrifft einen Sensor, bei dem es sich insbesondere um einen Positionssensor handelt und der eine Erfassungseinheit zum Erfassen einer Messgröße und zum Erzeugen eines Messsignals, das die erfasste Messgröße repräsentiert, sowie eine Anpassungseinheit für die Messgröße bzw. das Messsignal aufweist.

Das Messsignal von Sensoren, die eine bestimmte Messgröße erfassen, weist ein Signal-Rauschverhältnis auf, das stark schwanken kann, wenn sich die Umgebungsbedingungen des Sensors ändern, beispielsweise die Temperatur und die Luftfeuchtigkeit. Um diese Schwankungen des Signal-Rauschverhältnisses zu verringern, werden bei vielen Sensoren Filter verwendet, die beispielsweise adaptive Filter umfassen.

Die Verwendung solcher Filter vergrößert jedoch beispielsweise bei Positionssensoren die Latenz der Messsignale. Dies ist bei vielen Anwendungen von Positionssensoren nicht erwünscht. Bei Beschleunigungsvorgängen kann beispielsweise die Verwendung von Filtern unerwünschte Positionsabweichungen bewirken. Wenn das verwendete Filter kein adaptives Filter ist, kann ferner zwar die Schwankung des Signal-Rauschverhältnisses verringert werden, solche Filter gestatten es jedoch nicht, das Signal-Rauschverhältnis möglichst konstant zu halten, wenn sich die Umgebungsbedingungen des Sensors ändern.

In der CH 702 140 A2 sind ein Sensor und ein Verfahren zum Steuern eines Messignals eines solchen Sensors beschrieben, bei denen eine Temperaturkompensation vorgesehen ist. Mittels des Sensors wird die Temperatur als Messgröße erfasst und ein entsprechendes Messsignal erzeugt. Bei der Temperaturkompensation wird ein Indikator für eine Umgebungsbedingung des Sensors in Form einer Temperaturmessung erfasst. Das Messsignal des Sensors wird mittels des Ausgangssignals der Temperaturkompensation eingestellt, um einen hohen Signal-Rauschabstand zu erreichen.

Die US 2003/0135314 A1 beschreibt einen Sensor und ein Verfahren gemäß einer ähnlichen Technologie, bei denen eine Temperaturkompensation für ein Messsignal eines Sensors erfolgt, um das Rauschen des Messignals zu verringern.

In der EP 3 671 105 B1 sind ein Sensor und ein Verfahren gemäß einer ähnlichen Technologie beschrieben.

Eine Aufgabe der Erfindung besteht darin, einen Sensor zu schaffen, dessen Messsignal bei sich ändernden Umgebungsbedingungen des Sensors ein möglichst konstantes Signal-Rauschverhältnis aufweist.

Diese Aufgabe wird durch einen Sensor mit den Merkmalen des Anspruchs 1 gelöst. Vorteilhafte Weiterbildungen der Erfindung sind in den Unteransprüchen, der Beschreibung und den Zeichnungen angegeben.

Der Sensor, bei dem es sich insbesondere um einen Positionssensor handelt, umfasst eine Erfassungseinheit und eine Anpassungseinheit. Die Erfassungseinheit ist ausgebildet, eine Messgröße zu erfassen und ein Messsignal zu erzeugen, das die erfasste Messgröße repräsentiert. Die Anpassungseinheit ist ausgebildet, zumindest einen Indikator für mindestens eine Umgebungsbedingung des Sensors zu ermitteln und eine Stellgröße, welche die Messgröße beeinflusst, anhand des zumindest einen Indikators für die mindestens eine Umgebungsbedingung des Sensors derart einzustellen, dass ein Verhältnis des von der Erfassungseinheit erzeugten Messignals und eines Rauschens des Messsignals in einem vorbestimmten Bereich liegt und dabei unabhängig von der mindestens einen Umgebungsbedingung konstant ist.

Der Indikator für die mindestens eine Umgebungsbedingung des Sensors kann beispielsweise dadurch ermittelt werden, dass eine oder mehrere Umgebungsbedingungen des Sensors wie etwa die Umgebungstemperatur oder die Luftfeuchtigkeit in der Umgebung direkt erfasst werden. Der Indikator kann jedoch auch indirekt dadurch ermittelt werden, dass beispielsweise eine Verstärkung einer Verstärkungseinrichtung der Anpassungseinheit einer Änderung der mindestens einen Umgebungsbedingung folgt oder das Verhältnis des Messsignals und des Rauschens des Messsignals erfasst wird, da dieses Verhältnis von den Umgebungsbedingungen abhängt.

Die Stellgröße, welche die Messgröße beeinflusst, kann beispielsweise eine Verstärkung innerhalb der Anpassungseinheit sein, die somit das Messsignal entsprechend der ermittelten Umgebungsbedingung erhöht oder verringert, um dadurch das Verhältnis des Messsignals zu dessen Rauschen bzw. das Signal-Rauschverhältnis des Messsignals in dem vorbestimmten Bereich zu halten. Die Stellgröße kann jedoch auch ein Signal für eine Vorrichtung sein, welche die Messgröße und damit das Messsignal direkt beeinflusst. Beispielsweise kann bei einem optischen Positionssensor der Betrag des Messsignals dadurch verändert werden, dass ein Strom verändert wird, der einer Lichtquelle des optischen Positionssensors zugeführt wird.

Der erfindungsgemäße Sensor zeichnet sich dadurch aus, dass durch das Einstellen der Stellgröße anhand einer oder mehrerer ermittelter Umgebungsbedingungen die Messgröße und damit das Messsignal derart an die Umgebungsbedingungen angepasst werden, dass das Verhältnis des Messsignals zu dessen Rauschen bzw. das Signal-Rauschverhältnis des Messsignals in dem vorbestimmten Bereich gehalten wird und dabei nahezu konstant ist. Mit anderen Worten bewirkt die Anpassungseinheit, dass Schwankungen des Signal-Rauschverhältnisses des Messsignals verringert oder vermieden werden. Eine Filterung des Messsignals ist daher nicht mehr oder nur noch in geringem Umfang erforderlich, so dass das Messsignal den negativen Effekten der Filterung nicht mehr oder nur in einem entsprechend geringen Umfang unterworfen ist. Beispielsweise kann eine zusätzliche Latenz, die aufgrund der Filterung des Messsignals auftreten würde, verringert oder zumindest vermieden werden. Bei bestimmten Applikationen, die das Messsignal des Sensors verwenden, können Störungen aufgrund eines schwankenden Signal-Rauschverhältnisses des Messignals unterdrückt werden.

Gemäß einer Ausführungsform kann die Anpassungseinheit ferner ausgebildet sein, den zumindest einen Indikator für die mindestens eine Umgebungsbedingung des Sensors derart zu ermitteln, dass zumindest eine Zustandsgröße, insbesondere eine Temperatur und/oder eine Luftfeuchtigkeit, einer Umgebung des Sensors mittels des Sensors selbst oder mittels einer externen Einrichtung gemessen wird, und die Stellgröße anhand der gemessenen Zustandsgröße derart einzustellen, dass ein Betrag des Messsignals direkt oder indirekt angepasst wird.

Die externe Einrichtung kann beispielsweise ein Thermometer oder ein Feuchtigkeitsmesser sein, das bzw. der ein Messsignal für die Anpassungseinheit bereitstellt. Der Betrag des Messsignals kann beispielsweise dadurch direkt angepasst werden, dass eine Verstärkung innerhalb der Anpassungseinheit in Einklang mit einer Änderung der gemessenen Umgebungsbedingung oder Umgebungsbedingungen verändert wird. Eine indirekte Anpassung des Messsignals kann dadurch erfolgen, dass ein Signal oder beispielsweise ein Strom für eine weitere Vorrichtung verändert wird, deren Ausgabe oder Ausgangssignal die Messgröße direkt beeinflusst, die der Sensor erfasst. Beispielsweise kann das Messsignal eines optischen Positionssensors dadurch angepasst werden, dass ein Strom für eine Lichtquelle verändert wird, die eine Empfangseinheit des Positionssensors beleuchtet. Bei dieser Ausführungsform kann das Signal-Rauschverhältnis des Messsignals somit durch eine Messung der Umgebungsbedingung und eine entsprechende Anpassung des Messsignals in dem vorbestimmten Bereich und insbesondere konstant gehalten werden.

Die Anpassungseinheit kann eine Verstärkungseinrichtung umfassen, und die Stellgröße kann eine Verstärkung der Verstärkungseinrichtung umfassen, mit der die Anpassungseinheit das Messsignal verstärkt. Mit anderen Worten erfolgt eine direkte Beeinflussung des Messsignals und damit des Signal-Rauschverhältnisses, indem die Verstärkung der Verstärkungseinrichtung innerhalb der Anpassungseinheit anhand der ermittelten mindestens einen Umgebungsbedingung angepasst wird.

Ferner kann der zumindest eine Indikator für die mindestens eine Umgebungsbedingung des Sensors dadurch gebildet sein, dass die Verstärkung der Verstärkungseinrichtung eine zumindest ähnliche Änderungscharakteristik wie die mindestens eine Umgebungsbedingung aufweist. Bei einer solchen Ausführungsform kann die Verstärkung der Verstärkungseinrichtung gleichzeitig sowohl den Indikator für die mindestens eine Umgebungsbedingung bilden, der sich entsprechend der Umgebungsbedingung ändert und beispielsweise der Temperatur folgt, und als auch die Stellgröße zur Anpassung des Messsignals darstellen.

Das Messsignal kann bei dieser Ausführungsform somit eine Selbstkompensation bezüglich der sich ändernden Umgebungsbedingungen aufweisen, da die Verstärkung des Messsignals den sich ändernden Umgebungsbedingungen folgen kann. Die Verstärkungseinrichtung kann beispielsweise einen Widerstand mit einem positiven Temperaturkoeffizienten (PTC-Widerstand) aufweisen, bei welchem sich der Betrag des Widerstands derart ändert, dass die Verstärkung proportional zur Temperatur ist. Es erfolgt bei dieser Ausführungsform somit eine automatische Anpassung des Betrags des Messsignals proportional zur Änderung der mindestens einen Umgebungsbedingung.

Gemäß einer weiteren Ausführungsform kann der zumindest eine Indikator das Verhältnis des von der Erfassungseinheit erzeugten Messsignals und des Rauschens des Messsignals umfassen. Mit anderen Worten kann der Indikator bei dieser Ausführungsform das Signal-Rauschverhältnis selbst sein, das mittels der Anpassungseinheit erfasst wird. Die Anpassungseinheit kann beispielsweise den Betrag des Messsignals und eine Amplitude des Rauschens des Messsignals erfassen und miteinander in das Verhältnis setzen, um das Signal-Rauschverhältnis des Messsignals und dadurch den Indikator für die mindestens eine Umgebungsbedingung zu ermitteln.

Die Anpassungseinheit kann ferner ausgebildet sein, das Rauschen des Messsignals anhand der Ermittlung einer Standardabweichung des Messsignals zyklisch zu erfassen. Anhand des derart erfassten Rauschens des Messsignals kann die Anpassungseinheit das Signal-Rauschverhältnis des Messsignals ermitteln, um dieses einerseits durch Einstellen der Stellgröße in dem vorbestimmten Bereich zu halten und um andererseits bei der vorstehend beschriebenen Ausführungsform den Indikator für die mindestens eine Umgebungsbedingung zu bilden.

Alternativ oder zusätzlich kann die Anpassungseinheit ausgebildet sein, eine Bandbreite einer Signalverarbeitungseinheit für das Messsignal des Sensors anhand des zumindest einen Indikators derart einzustellen, dass das Verhältnis des Messsignals und des Rauschens des Messsignals in dem vorbestimmten Bereich liegt. Die Signalverarbeitungseinheit kann Bestandteil der Anpassungseinheit sein und als analoge Signalverarbeitungseinheit ausgebildet sein. Im Gegensatz zu einigen der vorstehenden Ausführungsformen, bei denen das Messsignal selbst angepasst wird, um das Signal-Rauschverhältnis möglichst konstant zu halten, wird das Signal-Rauschverhältnis bei der vorliegenden Ausführungsform dadurch beeinflusst, dass die Größe des Rauschens durch die Veränderung der Bandbreite der Signalverarbeitungseinheit adaptiv angepasst wird. Mit anderen Worten kann bei dieser Ausführungsform eine adaptive Filterung des Messsignals erfolgen, die an die zumindest eine Umgebungsbedingung angepasst sein kann. Die Bandbreite für die Signalverarbeitungseinheit kann jedoch derart eingestellt werden, dass eine Vergrößerung der Latenz des Messsignals vermieden werden kann.

Der Sensor kann einen Winkelsensor oder einen linearen Positionssensor umfassen, bei denen es sich insbesondere um einen optischen Winkelsensor oder einen optischen linearen Positionssensor handeln kann. Bei solchen optischen Sensoren kann die Stellgröße gemäß einer weiteren Ausführungsform einen Strom umfassen, welcher einer Lichtquelle des optischen Winkelsensors oder des optischen linearen Positionssensors zugeführt wird. Ferner kann die Anpassungseinheit ausgebildet sein, den Strom anhand des Indikators für die mindestens eine Umgebungsbedingung einzustellen.

Das Messsignal des optischen Sensors kann bei dieser Ausführungsform somit indirekt anhand des Stroms für die Lichtquelle an die mindestens eine Umgebungsbedingung angepasst werden, um das Signal-Rauschverhältnis des Messsignals in dem vorbestimmten Bereich zu halten.

Alternativ kann der Sensor einen magnetischen, kapazitiven oder induktiven Winkelsensor oder einen magnetischen, kapazitiven oder induktiven linearen Positionssensor umfassen. Entsprechend den optischen Sensoren können bei solchen Sensoren magnetische Eigenschaften, Kapazitäten oder Induktivitäten des jeweiligen Sensors auf ähnliche Weise in Einklang mit der mindestens einen Umgebungsbedingung angepasst werden, wie dies für den Strom der Lichtquelle optischer Sensoren vorstehend beschrieben ist.

Weiterer Gegenstand der Erfindung ist ein Verfahren zum Steuern eines Messsignals eines Sensors, insbesondere eines Positionssensors. Gemäß dem Verfahren wird eine Messgröße mittels des Sensors erfasst und ein Messsignal erzeugt, das die erfasste Messgröße repräsentiert. Ferner wird zumindest ein Indikator für mindestens eine Umgebungsbedingung des Sensors ermittelt. Eine Stellgröße, welche die Messgröße beeinflusst, wird anhand des zumindest einen Indikators für die mindestens eine Umgebungsbedingung des Sensors derart eingestellt, dass ein Verhältnis des Messsignals und eines Rauschens des Messsignals in einem vorbestimmten Bereich liegt und dabei unabhängig von der mindestens einen Umgebungsbedingung konstant ist.

Für das Verfahren gelten die Ausführungen zum Sensor entsprechend, dies gilt insbesondere hinsichtlich Vorteilen und bevorzugten Ausführungsformen. Weiterhin versteht es sich, dass sämtliche hierin genannten Merkmale miteinander kombinierbar sind, sofern nicht explizit etwas Gegenteiliges angegeben ist.

Gemäß einer Ausführungsform des Verfahrens wird der zumindest eine Indikator für die mindestens eine Umgebungsbedingung des Sensors derart ermittelt, dass zumindest eine Zustandsgröße, insbesondere eine Temperatur und/oder eine Luftfeuchtigkeit, einer Umgebung des Sensors mittels des Sensors oder einer externen Einrichtung gemessen wird, und die Stellgröße kann anhand der gemessenen Zustandsgröße derart eingestellt werden, dass ein Betrag des Messsignals direkt oder indirekt angepasst wird.

Der Sensor kann eine Verstärkungseinrichtung für das Messsignal umfassen, und das Einstellen der Stellgröße kann umfassen, dass eine Verstärkung der Verstärkungseinrichtung, mit der das Messsignal verstärkt wird, eingestellt wird oder sich mit einer zumindest ähnlichen Charakteristik wie die mindestens eine Umgebungsbedingung ändert.

Ferner kann das Verhältnis des erzeugten Messsignals und des Rauschens des Messsignals erfasst werden, um den zumindest einen Indikator der mindestens einen Umgebungsbedingung zu bilden.

Nachfolgend wird die Erfindung beispielhaft anhand einer vorteilhaften Ausführungsform unter Bezugnahme auf die beigefügten Figuren beschrieben. Es zeigen, jeweils schematisch:
- Fig. 1: eine Darstellung eines beispielhaften Sensors und
- Fig. 2: drei verschiedene Blockdiagramme, die das Einstellen eines gewünschten Signal-Rauschverhältnisses veranschaulichen.

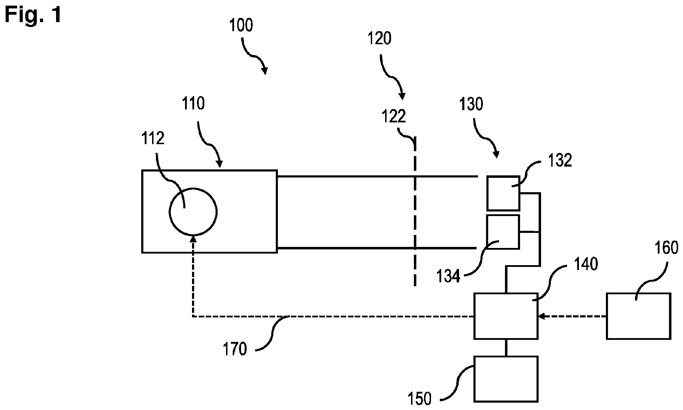

Fig. 1 zeigt als Beispiel eines erfindungsgemäßen Sensors eine schematische Übersicht eines Positionssensors, der als optischer Encoder 100 ausgebildet ist. Der optische Encoder 100 weist eine Beleuchtungseinheit 110, die eine Lichtquelle 112 mit einer Leuchtdiode (LED) umfasst, und eine Modulationseinrichtung 120 auf. Die Beleuchtungseinheit 110 emittiert Licht in Richtung der Modulationseinrichtung 120.

Die Modulationseinrichtung 120 weist eine Modulationseinheit bzw. einen Modulator 122 auf, die bzw. der ein Strichmuster umfasst, das in Fig. 1 durch eine gestrichelte Linie angedeutet ist. Die Modulationseinrichtung 120 wird mit dem von der Beleuchtungseinrichtung 110 emittierten Licht beleuchtet. Das Strichmuster kann z.B. helle und dunkle Bereiche aufweisen, wobei das Licht die hellen Bereiche durchdringen kann.

Der Sensor bzw. optische Encoder 100 umfasst ferner eine Mess- oder Erfassungseinheit 130, die mindestens zwei Empfängerdioden bzw. Fotodioden 132, 134 aufweist. Die Empfängerdioden 132, 134 sind dafür vorgesehen, das Licht zu empfangen, das von der Beleuchtungseinheit 110 emittiert wird und in Transmission durch die Modulationseinrichtung 120 hindurchtritt. Die Erfassungseinheit 130 bzw. deren Empfängerdioden 132, 134 geben ein jeweiliges elektrisches Messsignal aus, das die Intensität des empfangenen Lichts repräsentiert.

Der Encoder 100 umfasst darüber hinaus eine Anpassungseinheit 140, die das elektrische Signal der Erfassungeinheit 130 bzw. die Messsignale der jeweiligen Empfängerdioden 132, 134 empfängt. Die elektrischen Signale, die von den Empfängerdioden 132, 134 an die Anpassungseinheit 140 übertragen werden, werden durch die Anpassungseinheit 140 verstärkt, um ein geeignetes Ausgangssignal der Anpassungseinheit 140 an eine Auswertungseinheit 150 auszugeben.

Die Auswertungseinheit 150 ist dafür vorgesehen, anhand der verstärkten Signale der Empfängerdioden 132, 134 eine relative oder absolute Position des Modulationseinheit 122 zu ermitteln. Wenn sich die Modulationseinheit 122 bewegt, d.h. verschoben wird, wird die Lichtintensität, die durch die Modulationseinrichtung 120 hindurchtritt, sinusförmig moduliert. Das Strichmuster der Modulationseinheit 122 ist derart ausgestaltet, dass die elektrischen Signale der Empfängerdioden 132, 134 gegeneinander phasenverschoben sind. Anhand dieser phasenverschobenen elektrischen Signale der Empfängerdioden 132, 134 ermittelt die Auswertungseinheit 150 eine Verschiebung der Modulationseinheit 122 sowie unter Berücksichtigung einer nicht dargestellten Referenzmarke eine absolute Position der Modulationseinheit 122.

Der in Fig. 1 dargestellte optische Encoder 100 ist somit als linearer Positionsgeber ausgebildet. Wenn der optische Encoder 100 jedoch als Drehgeber ausgebildet ist, bei dem sich die Modulationseinheit 122 beispielsweise an einer Motorwelle befindet, kann mittels des optischen Encoders bzw. Drehgebers 100 eine Drehposition der Motorwelle ermittelt werden.

Die Anpassungseinheit 140 steht ferner mit einer externen Einrichtung 160 signaltechnisch in Verbindung, die ausgebildet ist, Umgebungsbedingungen des

Sensors 100 zu erfassen. Die Umgebungsbedingungen umfassen beispielsweise eine Temperatur und/oder eine Luftfeuchtigkeit in der Umgebung des Sensors bzw. Encoders 100 sowie gegebenenfalls weitere Größen, welche die Bedingungen des Sensors 100 in dessen Umgebung festlegen. Somit ist die externe Einrichtung 160 zum Erfassen der Umgebungsbedingungen wie Temperatur und/oder die Luftfeuchtigkeit in der Umgebung des Sensors 100 vorgesehen.

Wenn sich die Umgebungsbedingungen des Sensors 100 ändern, ändert sich auch das Rauschen der Messsignale des Sensors, d.h. das Rauschen der Messsignale, die von den Empfängerdioden 132, 134 ausgegeben werden. Beispielsweise kann das Rauschen dieser Signale zunehmen, wenn die Temperatur in der Umgebung des Sensors 100 zunimmt. Somit kann das Signal-Rauschverhältnis eines oder mehrerer Messsignale, die der Sensor 100 ausgibt, bei einer Veränderung der Umgebungsbedingungen des Sensors 100 besser oder schlechter werden, d.h. zunehmen oder abnehmen. Eine Verschlechterung des Signal-Rauschverhältnisses der Ausgangssignale des Sensors 100 ist jedoch in vielen Fällen unerwünscht und kann weitere Applikationen stören, die auf die Messsignale des Sensors 100 angewiesen sind.

Die Anpassungseinheit 140 ist daher erfindungsgemäß dafür vorgesehen, das Signal-Rauschverhältnis des einen oder der mehreren Messsignale des Sensors 100 möglichst konstant zu halten. Mit anderen Worten sorgt die Anpassungseinheit 140 dafür, dass das Signal-Rauschverhältnis der Messsignale des Sensors 100 in einem vorbestimmten Bereich liegt.

In dem Ausführungsbeispiel, das in Fig. 1 dargestellt ist, empfängt die Anpassungseinheit 140 Signale der externen Einrichtung 160, welche die Umgebungsbedingungen des Sensors 100 widerspiegeln. Die Anpassungseinheit 140 empfängt beispielsweise ein oder mehrere Signale, welche die Temperatur und/oder die Luftfeuchtigkeit in der Umgebung des Sensors 100 angeben. Die Anpassungseinheit 140 ist ferner mit der Lichtquelle bzw. **LED** 112 der Beleuchtungseinheit 110 des Sensors bzw. optischen Encoders 100 signaltechnisch verbunden, um die Stromstärke zu steuern, die der Lichtquelle 112 zugeführt wird.

Die Anpassungseinheit 140 gibt zu diesem Zweck ein Steuersignal 170 an die Beleuchtungseinheit 110 aus, das der Änderung der Umgebungsbedingungen entspricht, die durch die externe Einrichtung 160 erfasst werden. Das Steuersignal 170 ändert sich beispielsweise proportional zu der Temperatur und/oder zu der Luftfeuchtigkeit, die durch die externe Einrichtung 160 erfasst werden und von dieser in der Form von entsprechenden Signalen an die Anpassungseinheit 140 ausgegeben werden. Anhand des Steuersignals 170 ändert die Beleuchtungseinheit 110 den Strom für die Lichtquelle bzw. LED 112 entsprechend der Änderung der Umgebungsbedingungen, d.h. der Änderung der Temperatur und/oder der Luftfeuchtigkeit. Wenn beispielsweise die Umgebungstemperatur zunimmt, bewirkt das Steuersignal 170, dass der LED-Strom für die Lichtquelle bzw. LED 112 zunimmt.

Dadurch nimmt die Lichtstärke zu, die von der Beleuchtungseinheit 110 ausgegeben wird, so dass die Empfängerdioden 132, 134 mehr Licht empfangen und entsprechend größere Signale ausgeben. Durch die Zunahme der Messsignale, die von den Empfängerdioden 132, 134 ausgegeben werden, wird das Signal-Rauschverhältnis verbessert, das letztlich von der Anpassungseinheit 140 an die Auswertungseinheit 150 ausgegeben wird. Bei der in Fig. 1 dargestellten Ausführungsform des Sensors 100 wird somit das Signal-Rauschverhältnis des Messsignals, das der Sensor 100 ausgibt, indirekt dadurch in einem vorbestimmten Bereich bzw. möglichst konstant gehalten, dass der Strom für die LED bzw. Lichtquelle 112 entsprechend den Umgebungsbedingungen, d.h. entsprechend der Temperatur und/oder der Luftfeuchtigkeit, erhöht bzw. verringert wird.

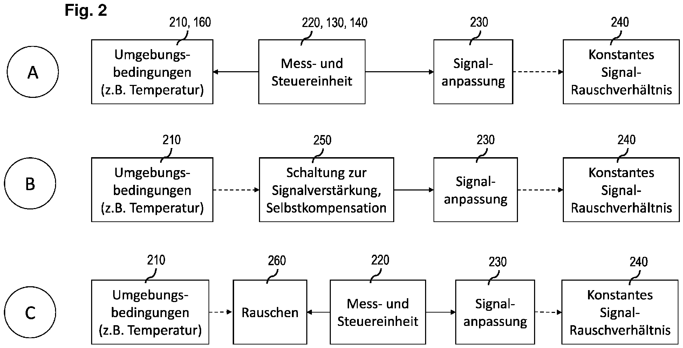

Die in Fig. 1 dargestellte Ausführungsform entspricht daher einer erfindungsgemäßen Vorgehensweise zum Einstellen bzw. Konstanthalten des Signal-Rauschverhältnisses des einen oder der mehreren Messsignale eines Sensors 100, wie diese Vorgehensweise schematisch in Fig. 2 in der Zeile "A" dargestellt ist. Die Umgebungsbedingungen 210, beispielsweise die Temperatur in der Umgebung des Sensors, werden mittels der externen Einrichtung 160 oder mittels des Sensors 100 selbst erfasst. Eine Mess- und Steuereinheit des Sensors 100, die beispielsweise die Erfassungseinheit 130 und die Anpassungseinheit 140 der Ausführungsform von Fig. 1 umfasst, erfasst die Umgebungsbedingungen bzw. empfängt Signale für diese, wie beispielsweise Messwerte für die Temperatur und/oder die Luftfeuchtigkeit in der Umgebung des Sensors 100. Dies ist in Fig. 2 in der Zeile "A" durch den Pfeil dargestellt, der von der Mess- und Steuereinheit 220 nach links in Richtung der Umgebungsbedingungen 210 zeigt. Die Mess- und Steuereinheit 220 empfängt bzw. erfasst somit eine oder mehrere Messgrößen, welche die Umgebungsbedingungen des Sensors 100 widerspiegeln.

Anschließend führt die Mess- und Steuereinheit 220 eine Signalanpassung 230 durch, wie dies vorstehend für die Ausführungsform von Fig. 1 beispielhaft beschrieben ist. In diesem Ausführungsbeispiel entsprechend der Zeile "A" von Fig. 2 sendet die Mess- und Steuereinheit 220 das Steuersignal 170 (vgl. Fig. 1) an die Beleuchtungseinheit 110, um den Strom für die Lichtquelle bzw. LED 112 entsprechend einer Änderung der Umgebungsbedingungen wie beispielsweise der Temperatur zu erhöhen oder zu verringern. Dadurch werden wiederum die Messsignale erhöht bzw. verringert, die von den Empfängerdioden 132, 134 ausgegeben werden. Durch diese Erhöhung bzw. Verringerung der Messsignale der Empfängerdioden 132, 134 wird das Signal-Rauschverhältnis des endgültigen Messsignals des Sensors 100 entsprechend den Umgebungsbedingungen erhöht bzw. verringert, um das Signal-Rauschverhältnis möglichst konstant zu halten, wie dies in Fig. 2 bei 240 schematisch angegeben ist. Der gestrichelte Pfeil zwischen 230 und 240 soll andeuten, dass ein nahezu konstantes Signal-Rauschverhältnis die Konsequenz der Signalanpassung 230 ist.

Alternativ oder zusätzlich kann die Signalanpassung 230 gemäß der Ausführungsform von Zeile "A" von Fig. 2 dadurch direkt ausgeführt werden, dass eine Verstärkungsschaltung in der Anpassungseinheit 140 direkt an die schwankenden Umgebungsbedingungen 210 angepasst wird. Dabei kann zusätzlich eine Bandbreite einer Signalverarbeitung in der Anpassungseinheit 140 entsprechend den Umgebungsbedingungen angepasst werden, beispielsweise bei einer analogen Signalverarbeitung die Bandbreite eines Tiefpasses bzw. eines Bandpasses. Bei dieser Ausführungsform erfolgt die Signalanpassung 230 nicht oder nur teilweise über das Steuersignal 170, das zum Anpassen des Stroms vorgesehen ist, welcher der LED bzw. Lichtquelle 112 in der Ausführungsform von Fig. 1 zugeführt wird. Daher ist das Steuersignal 170 in Fig. 1 mit einer gestrichelten Linie dargestellt, die andeuten soll, dass das Steuersignal 170 nur eine von mehreren Möglichkeiten dargestellt, um die Signalanpassung 230 auszuführen.

Bei einer alternativen Ausführungsform, die in der Zeile "B" in Fig. 2 dargestellt ist, umfasst die Anpassungseinheit 140 eine Schaltung 250 zur Signalverstärkung, welche die gleiche oder zumindest eine ähnliche Charakteristik aufweist wie eine oder mehrere Umgebungsbedingungen, die das Rauschen des Messsignals des Sensors 100 beeinflussen. Die Schaltung 250 zur Signalverstärkung kann bei dieser Ausführungsform beispielsweise eine Diode mit einer entsprechenden Durchlasscharakteristik oder einem Widerstand mit einem positiven Temperaturkoeffizienten (PTC-Widerstand) umfassen, deren Charakteristik bzw. Widerstand sich mit der Temperatur auf die gleiche oder ähnliche Weise ändert wie das Rauschen des Messsignals, das der Sensor 100 ausgibt.

Bei der Ausführungsform von Zeile "B" von Fig. 2 erfolgt somit keine direkte Erfassung der Umgebungsbedingungen 210. Stattdessen verändern die Umgebungsbedingungen 210 mindestens eine Charakteristik innerhalb der Schaltung 250 zur Signalverstärkung auf die gleiche Weise, wie sie das Rauschen des Messsignals des Sensors 100 verändern. Dadurch erfolgt eine automatische Anpassung bzw. Selbstkompensation der Signalstärke des Messsignals, das der Sensor 100 ausgibt, welche beispielsweise proportional zur Änderung der Umgebungsbedingungen ist.

Die Signalanpassung 230 erfolgt somit bei der Ausführungsform gemäß Zeile "B" von Fig. 2 automatisch dadurch, dass die Umgebungsbedingungen 210 eine oder mehrere Charakteristiken der Schaltung 250 zur Signalverstärkung beeinflussen. Durch die automatische Anpassung der Signalstärke wird wiederum das Signal-Rauschverhältnis des Messsignals des Sensors 100 möglichst konstant bzw. in einem vorbestimmten Bereich gehalten, wie dies bei 240 dargestellt ist.

Dass die Umgebungsbedingungen 210 die Schaltung 250 zur Signalverstärkung beeinflussen, ohne dass die Umgebungsbedingungen 210 durch eine Messung erfasst werden, ist durch den gestrichelten Pfeil zwischen 210 und 250 dargestellt. Ebenso ist die Verbindung zwischen der externen Einrichtung 160 und der Anpassungseinheit 140 in Fig. 1 gestrichelt dargestellt, da die Umgebungsbedingungen bei den Ausführungsformen gemäß den Zeilen "B" und "C" von Fig. 2 nicht mittels des Sensors 100 oder der externen Einrichtung 160 in der Form einer oder mehrerer Messgrößen erfasst werden. In Fig. 2 geben die gestrichelten Pfeile zwischen der Signalanpassung 230 und dem möglichst konstanten Signal-Rauschverhältnis 240 wiederum an, dass das möglichst konstante Signal-Rauschverhältnis 240 eine Konsequenz der Signalanpassung 230 ist.

Bei einer weiteren alternativen Ausführungsform, die in der Zeile "C" von Fig. 2 dargestellt ist, dient das Signal-Rauschverhältnis selbst als Mess- bzw. Regelgröße, um dieses in einem möglichst konstanten Bereich zu halten. Die Mess- und Steuereinheit 220 erfasst bzw. misst zu diesem Zweck das Rauschen 260 eines oder mehrerer Messsignale des Sensors 100, beispielsweise das Rauschen der Signale, welche die Empfängerdioden 132, 134 ausgeben. Beispielsweise kann die Anpassungseinheit 140 ausgebildet sein, das Rauschen der Messsignale anhand der Ermittlung einer Standardabweichung der Messsignale zyklisch zu erfassen.

Das Rauschen 260 wird wiederum von den Umgebungsbedingungen 210 beeinflusst, wie dies durch den gestrichelten Pfeil zwischen den Blöcken 210 und 260 in Pfeile "C" von Fig. 2 dargestellt ist. Die Mess- und Steuereinheit 220 ermittelt anschließend anhand des einen oder der mehreren Messsignale und des Rauschens 260 das entsprechende Signal-Rauschverhältnis und verwendet dieses für die Signalanpassung 230. Die Signalanpassung 230 kann auf direkte oder indirekte Weise derart ausgeführt werden, wie dies vorstehend in Zusammenhang mit Fig. 1 bzw. Zeile "A" von Fig. 2 beschrieben ist.

Konkret wird bei dieser Ausführungsform das Signal-Rauschverhältnis, das anhand des Rauschens 260 ermittelt wird, als Regelgröße verwendet, um entweder die Größe der Messsignale des Sensors bzw. der Empfängerdioden 132, 134 auf indirekte Weise anzupassen, indem der Strom für die LED 112 mittels des Steuersignals 170 angepasst wird, oder um die Verstärkung einer Verstärkungsschaltung innerhalb der Anpassungseinheit und/oder die Bandbreite einer Signalverarbeitung innerhalb der Anpassungseinheit entsprechend dem erfassten Signal-Rauschverhältnis als Regelgröße anzupassen. Die Signalanpassung 230 mittels des Signal-Rauschverhältnisses als Regelgröße bewirkt bei der Ausführungsform gemäß Zeile "C" somit wiederum, dass das Signal-Rauschverhältnis des Messsignals, das der Sensor 100 letztlich ausgibt, möglichst konstant ist bzw. in einem vorbestimmten Bereich liegt, wie dies durch den Block 240 in Fig. 2 dargestellt ist.

### Bezugszeichenliste

- 100: Sensor, optischer Encoder
- 110: Beleuchtungseinheit
- 112: Lichtquelle mit Leuchtdioden (LED)
- 120: Modulationseinrichtung
- 122: Modulationseinheit bzw. Modulator
- 130: Erfassungseinheit
- 132, 134: Empfängerdiode
- 140: Anpassungseinheit
- 150: Auswertungseinheit
- 160: Externe Einrichtung zur Erfassung der Umgebungsbedingungen
- 170: Steuersignal
- 210: Umgebungsbedingungen
- 220: Mess- und Steuereinheit
- 230: Signalanpassung
- 240: Konstantes Signal-Rauschverhältnis
- 250: Schaltung zur Signalverstärkung
- 260: Rauschen

## Patentansprüche

1. Sensor (100), insbesondere Positionssensor, bevorzugt Winkel- oder Linearsensor, umfassend:
eine Erfassungseinheit (130), die ausgebildet ist, eine Messgröße zu erfassen und ein Messsignal zu erzeugen, das die erfasste Messgröße repräsentiert, und
eine Anpassungseinheit (140), die ausgebildet ist,
zumindest einen Indikator für mindestens eine Umgebungsbedingung des Sensors (100) zu ermitteln und
eine Stellgröße, welche die Messgröße beeinflusst, anhand des zumindest einen Indikators für die mindestens eine Umgebungsbedingung des Sensors (100) derart einzustellen, dass ein Verhältnis des von der Erfassungseinheit (130) erzeugten Messsignals und eines Rauschens des Messsignals in einem vorbestimmten Bereich liegt und dabei unabhängig von der mindestens einen Umgebungsbedingung konstant ist.

2. Sensor (100) nach Anspruch 1, wobei
die Anpassungseinheit (140) ferner ausgebildet ist:
den zumindest einen Indikator für die mindestens eine Umgebungsbedingung des Sensors (100) derart zu ermitteln, dass zumindest eine Zustandsgröße, insbesondere eine Temperatur und/oder eine Luftfeuchtigkeit, einer Umgebung des Sensors (100) mittels des Sensors (100) oder einer externen Einrichtung (160) gemessen wird, und
die Stellgröße anhand der gemessenen Zustandsgröße derart einzustellen, dass ein Betrag des Messsignals direkt oder indirekt angepasst wird.

3. Sensor (100) nach Anspruch 1 oder 2, wobei
die Anpassungseinheit (140) eine Verstärkungseinrichtung umfasst und
die Stellgröße eine Verstärkung der Verstärkungseinrichtung umfasst, mit der die Anpassungseinheit (140) das Messignal verstärkt.

4. Sensor (100) nach Anspruch 3, wobei
der zumindest eine Indikator dadurch gebildet ist, dass die Verstärkung der Verstärkungseinrichtung eine zumindest ähnliche Änderungscharakteristik wie die mindestens eine Umgebungsbedingung aufweist.

5. Sensor (100) nach einem der vorstehenden Ansprüche, wobei
der zumindest eine Indikator das Verhältnis des von der Erfassungseinheit erzeugten Messsignals und des Rauschens des Messsignals umfasst.

6. Sensor (100) nach einem der vorstehenden Ansprüche, wobei
die Anpassungseinheit (140) ausgebildet ist, das Rauschen des Messsignals anhand der Ermittlung einer Standardabweichung des Messsignals zyklisch zu erfassen.

7. Sensor (100) nach einem der vorstehenden Ansprüche, wobei
die Anpassungseinheit (140) ferner ausgebildet ist, eine Bandbreite einer Signalverarbeitungseinheit für das Messignal des Sensors (100) anhand des zumindest einen Indikators derart einzustellen, dass das Verhältnis des Messsignals und des Rauschens des Messsignals in dem vorbestimmten Bereich liegt.

8. Sensor (100) nach einem der vorstehenden Ansprüche, wobei
der Sensor (100) einen Winkelsensor oder einen linearen Positionssensor umfasst.

9. Sensor (100) nach Anspruch 8,
wobei der Sensor (100) einen optischer Winkelsensor oder einen optischen linearen Positionssensor umfasst.

10. Sensor (100) nach Anspruch 9, wobei
die Stellgröße einen Strom umfasst, welcher einer Lichtquelle (112) des optischen Winkelsensors oder des optischen linearen Positionssensors zugeführt wird, und
die Anpassungseinheit (140) ferner ausgebildet ist, den Strom anhand des Indikators einzustellen.

11. Sensor (100) nach Anspruch 8,
wobei der Sensor (100) einen magnetischen, kapazitiven oder induktiven Winkelsensor oder einen magnetischen, kapazitiven oder induktiven linearen Positionssensor umfasst.

12. Verfahren zum Steuern eines Messsignal eines Sensors (100), insbesondere eines Positionssensors, wobei das Verfahren umfasst, dass:
eine Messgröße mittels des Sensors (100) erfasst wird und ein Messsignal erzeugt wird, das die erfasste Messgröße repräsentiert,
zumindest ein Indikator für mindestens eine Umgebungsbedingung des Sensors ermittelt wird und
eine Stellgröße, welche die Messgröße beeinflusst, anhand des zumindest einen Indikators für die mindestens eine Umgebungsbedingung des Sensors (100) derart eingestellt wird, dass ein Verhältnis des Messsignals und eines Rauschens des Messsignals in einem vorbestimmten Bereich liegt und dabei unabhängig von der mindestens einen Umgebungsbedingung konstant gehalten wird.

13. Verfahren nach Anspruch 12, wobei
der zumindest eine Indikator für die mindestens eine Umgebungsbedingung des Sensors (100) derart ermittelt wird, dass zumindest eine Zustandsgröße, insbesondere eine Temperatur und/oder eine Luftfeuchtigkeit, einer Umgebung des Sensors (100) mittels des Sensors (100) oder einer externen Einrichtung gemessen wird, und
die Stellgröße anhand der gemessenen Zustandsgröße derart eingestellt wird, dass ein Betrag des Messignals direkt oder indirekt angepasst wird.

14. Verfahren nach Anspruch 12 oder 13, wobei
der Sensor (100) eine Verstärkungseinrichtung für das Messsignal umfasst,
das Einstellen der Stellgröße umfasst, dass eine Verstärkung der Verstärkungseinrichtung, mit der das Messsignal verstärkt wird, eingestellt wird oder sich mit einer zumindest ähnlichen Charakteristik wie die mindestens eine Umgebungsbedingung ändert.

15. Verfahren nach einem der Ansprüche 12 bis 14, wobei
das Verhältnis des erzeugten Messsignals und des Rauschens des Messsignals erfasst wird, um den zumindest einen Indikator der mindestens einen Umgebungsbedingung zu bilden.

## Claims

1. A sensor (100), in particular a position sensor, preferably an angular sensor or a linear sensor, comprising:
a detection unit (130) which is configured to detect a measurement variable and to generate a measurement signal which represents the detected measurement variable, and
an adjustment unit (140) which is configured
to determine at least one indicator for at least one environmental condition of the sensor (100) and
to set a manipulated variable, which influences the measurement variable, based on the at least one indicator for the at least one environmental condition of the sensor (100) such that a ratio of the measurement signal generated by the detection unit (130) and a noise of the measurement signal is in a predetermined range and is in this respect constant irrespective of the at least one environmental condition.

2. A sensor (100) according to claim 1, wherein
the adjustment unit (140) is further configured:
to determine the at least one indicator for the at least one environmental condition of the sensor (100) such that at least one state variable, in particular a temperature and/or a humidity, of an environment of the sensor (100) is measured by means of the sensor (100) or an external device (160), and
to set the manipulated variable based on the measured state variable such that a magnitude of the measurement signal is adjusted directly or indirectly.

3. A sensor (100) according to claim 1 or 2, wherein
the adjustment unit (140) comprises an amplification device, and
the manipulated variable comprises an amplification of the amplification device with which the adjustment unit (140) amplifies the measurement signal.

4. A sensor (100) according to claim 3, wherein
the at least one indicator is formed in that the amplification of the amplification device has an at least similar change characteristic to the at least one environmental condition.

5. A sensor (100) according to any one of the preceding claims, wherein
the at least one indicator comprises the ratio of the measurement signal generated by the detection unit and the noise of the measurement signal.

6. A sensor (100) according to any one of the preceding claims, wherein
the adjustment unit (140) is configured to cyclically detect the noise of the measurement signal based on the determination of a standard deviation of the measurement signal.

7. A sensor (100) according to any one of the preceding claims, wherein
the adjustment unit (140) is further configured to set a bandwidth of a signal processing unit for the measurement signal of the sensor (100) based on the at least one indicator such that the ratio of the measurement signal and the noise of the measurement signal is in the predetermined range.

8. A sensor (100) according to any one of the preceding claims, wherein
the sensor (100) comprises an angle sensor or a linear position sensor.

9. A sensor (100) according to claim 8,
wherein the sensor (100) comprises an optical angle sensor or an optical linear position sensor.

10. A sensor (100) according to claim 9, wherein
the manipulated variable comprises a current which is supplied to a light source (112) of the optical angle sensor or the optical linear position sensor, and
the adjustment unit (140) is further configured to set the current based on the indicator.

11. A sensor (100) according to claim 8,
wherein the sensor (100) comprises a magnetic, capacitive or inductive angle sensor or a magnetic, capacitive or inductive linear position sensor.

12. A method for controlling a measurement signal of a sensor (100), in particular a position sensor, wherein the method comprises that:
a measurement variable is detected by means of the sensor (100) and a measurement signal is generated that represents the detected measurement variable,
at least one indicator for at least one environmental condition of the sensor is determined, and
a manipulated variable, which influences the measurement variable, is set based on the at least one indicator for the at least one environmental condition of the sensor (100) such that a ratio of the measurement signal and a noise of the measurement signal is in a predetermined range and is in this respect kept constant irrespective of the at least one environmental condition.

13. A method according to claim 12, wherein
the at least one indicator for the at least one environmental condition of the sensor (100) is determined such that at least one state variable, in particular a temperature and/or a humidity, of an environment of the sensor (100) is measured by means of the sensor (100) or an external device, and
the manipulated variable is set based on the measured state variable such that a magnitude of the measurement signal is adjusted directly or indirectly.

14. A method according to claim 12 or 13, wherein
the sensor (100) comprises an amplification device for the measurement signal,
the setting of the manipulated variable comprises that an amplification of the amplification device, with which the measurement signal is amplified, is set or changes with an at least similar characteristic to the at least one environmental condition.

15. A method according to any one of the claims 12 to 14, wherein
the ratio of the generated measurement signal and the noise of the measurement signal is detected to form the at least one indicator of the at least one environmental condition.

## Revendications

1. Capteur (100), en particulier capteur de position, de préférence capteur angulaire ou linéaire, comprenant :
une unité de détection (130) conçue pour détecter une grandeur de mesure et pour générer un signal de mesure qui représente la grandeur de mesure détectée, et
une unité d'adaptation (140) conçue pour
déterminer au moins un indicateur pour au moins une condition d'environnement du capteur (100), et
régler une grandeur de réglage, influant sur la grandeur de mesure, à l'aide dudit au moins un indicateur pour ladite au moins une condition d'environnement du capteur (100) de telle sorte qu'un rapport entre le signal de mesure généré par l'unité de détection (130) et un bruit du signal de mesure se situe dans une plage prédéterminée et est constant indépendamment de ladite au moins une condition d'environnement.

2. Capteur (100) selon la revendication 1, dans lequel
l'unité d'adaptation (140) est en outre conçue pour
déterminer ledit au moins un indicateur pour ladite au moins une condition d'environnement du capteur (100) de telle sorte qu'au moins une grandeur d'état, en particulier une température et/ou une humidité de l'air, d'un environnement du capteur (100) est mesurée au moyen du capteur (100) ou d'un dispositif externe (160), et
régler la grandeur de réglage à l'aide de la grandeur d'état mesurée de telle sorte qu'une valeur du signal de mesure est adaptée directement ou indirectement.

3. Capteur (100) selon la revendication 1 ou 2, dans lequel
l'unité d'adaptation (140) comprend un dispositif d'amplification, et
la grandeur de réglage comprend un gain du dispositif d'amplification avec lequel l'unité d'adaptation (140) amplifie le signal de mesure.

4. Capteur (100) selon la revendication 3, dans lequel
ledit au moins un indicateur est formé du fait que le gain du dispositif d'amplification présente une caractéristique de variation au moins similaire à celle de ladite au moins une condition d'environnement.

5. Capteur (100) selon l'une des revendications précédentes, dans lequel ledit au moins un indicateur comprend le rapport entre le signal de mesure généré par l'unité de détection et le bruit du signal de mesure.

6. Capteur (100) selon l'une des revendications précédentes, dans lequel l'unité d'adaptation (140) est conçue pour détecter de manière cyclique le bruit du signal de mesure à l'aide de la détermination d'un écart-type du signal de mesure.

7. Capteur (100) selon l'une des revendications précédentes, dans lequel l'unité d'adaptation (140) est en outre conçue pour régler une largeur de bande d'une unité de traitement de signal pour le signal de mesure du capteur (100) à l'aide dudit au moins un indicateur de telle sorte que le rapport du signal de mesure et du bruit du signal de mesure se situe dans la plage prédéterminée.

8. Capteur (100) selon l'une des revendications précédentes, dans lequel le capteur (100) comprend un capteur angulaire ou un capteur de position linéaire.

9. Capteur (100) selon la revendication 8, dans lequel
le capteur (100) comprend un capteur angulaire optique ou un capteur de position linéaire optique.

10. Capteur (100) selon la revendication 9, dans lequel
la grandeur de réglage comprend un courant fourni à une source de lumière (112) du capteur angulaire optique ou du capteur de position linéaire optique, et
l'unité d'adaptation (140) est en outre conçue pour régler le courant à l'aide de l'indicateur.

11. Capteur (100) selon la revendication 8, dans lequel
le capteur (100) comprend un capteur angulaire magnétique, capacitif ou inductif ou un capteur de position linéaire magnétique, capacitif ou inductif.

12. Procédé de commande d'un signal de mesure d'un capteur (100), en particulier d'un capteur de position, le procédé consistant à :
détecter une grandeur de mesure au moyen du capteur (100), et à générer un signal de mesure qui représente la grandeur de mesure détectée,
déterminer au moins un indicateur pour au moins une condition d'environnement du capteur, et
régler une grandeur de réglage, influant sur la grandeur de mesure, à l'aide dudit au moins un indicateur pour ladite au moins une condition d'environnement du capteur (100) de telle sorte qu'un rapport du signal de mesure et d'un bruit du signal de mesure se situe dans une plage prédéterminée et est maintenu constant indépendamment de ladite au moins une condition d'environnement.

13. Procédé selon la revendication 12, dans lequel
ledit au moins un indicateur pour ladite au moins une condition d'environnement du capteur (100) est déterminé de telle sorte qu'au moins une grandeur d'état, en particulier une température et/ou une humidité de l'air, d'un environnement du capteur (100) est mesurée au moyen du capteur (100) ou d'un dispositif externe, et
la grandeur de réglage est réglée à l'aide de la grandeur d'état mesurée de telle sorte qu'une valeur du signal de mesure est adaptée directement ou indirectement.

14. Procédé selon la revendication 12 ou 13, dans lequel
le capteur (100) comprend un dispositif d'amplification du signal de mesure, le réglage de la grandeur de réglage comprend le réglage d'un gain du dispositif d'amplification avec lequel le signal de mesure est amplifié ou qui varie avec une caractéristique au moins similaire à celle de ladite au moins une condition d'environnement.

15. Procédé selon l'une des revendications 12 à 14, dans lequel
le rapport entre le signal de mesure généré et le bruit du signal de mesure est détecté pour former ledit au moins un indicateur de ladite au moins une condition d'environnement.
